(19) Europäisches Patentamt
European Patent Office
Office européen des brevets

(11) EP 0 884 668 A1

(12) **EUROPEAN PATENT APPLICATION**

(43) Date of publication:
16.12.1998 Bulletin 1998/51

(51) Int. Cl.⁶: **G06E 3/00**, G06K 9/58, G06K 9/74

(21) Application number: 98113965.2

(22) Date of filing: 27.08.1991

(84) Designated Contracting States:
DE FR GB

(30) Priority: 31.08.1990 JP 231708/90

(62) Document number(s) of the earlier application(s) in accordance with Art. 76 EPC:
91114384.0 / 0 473 121

(71) Applicant:
MATSUSHITA ELECTRIC INDUSTRIAL CO., LTD.
Kadoma-shi, Osaka-fu (JP)

(72) Inventors:
• Itoh, Masami
  Kakarazuka-shi, Hyogo-ken (JP)
• Nishii, Kanji
  Joto-ku, Osaka-shi, Osaka-fu (JP)
• Kawamura, Hiroyuki
  Katano-shi, Osaka-fu (JP)
• Fukui, Atsushi
  Hirakata-shi, Osaka-fu (JP)

(74) Representative:
Eisenführ, Speiser & Partner
Martinistrasse 24
28195 Bremen (DE)

Remarks:
This application was filed on 25 - 07 - 1998 as a divisional application to the application mentioned under INID code 62.

(54) **Logarithmic polar coordinate transforming method, vision recognizing method, and optical information processing apparatus**

(57) A vision recognizing method includes a logarithmic polar coordinate transforming method includes the steps of storing information (f) of an input image, generating complex amplitude information (f * A * T) based on the information (f) of the input image, phase information (A), and amplitude information (T), an amplitude of which changes according to distance between each point composing the amplitude information (T) and origin of logarithmic polar coordinate, and Fourier-transforming the complex amplitude information (f * A * T). An optical information processing apparatus is for carrying out the method by combination of lenses and liquid crystal displays.

Fig.1

**Description**

## BACKGROUND OF THE INVENTION

The present invention relates to a method for performing a logarithmic polar coordinate transformation with a high accuracy by using an optical information processing apparatus and a vision recognizing method to be carried out by using the above method.

As a conventional art, Japanese Laid-Open Patent Publication No. 2-57118 has been proposed by the present inventor(s) to perform a logarithmic polar coordinate transformation by using an optical information processing apparatus.

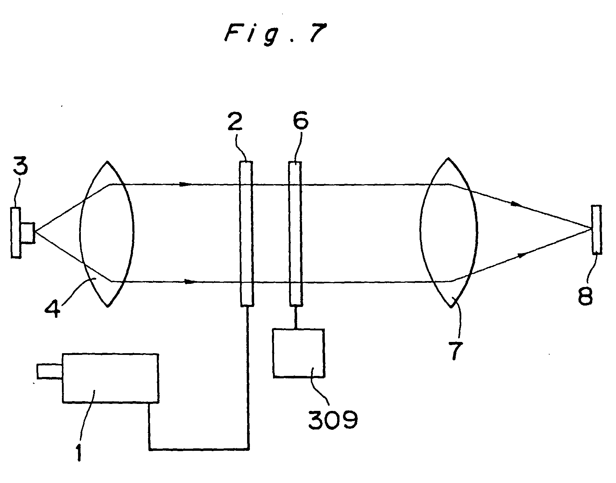

Fig. 7 shows the fundamental construction of the optical information processing apparatus according to the above-described conventional art. Reference numeral 1 denotes a television camera (hereinafter referred to as TV camera) capable of varying zoom ratio; 2 denotes a first liquid crystal display for displaying an image picked up by the TV camera 1; 3 denotes a laser diode; 4 denotes a collimator lens which makes beams emitted by the laser diode 3 parallel with each other; 6 denotes a second liquid crystal display adjacent to the first liquid crystal display 2; and 7 denotes a lens. The second liquid crystal display 6 is arranged on the first focal plane of the lens 7. Reference numeral 8 denotes a photoelectric converting device which is arranged on the second focal plane of the lens 7. Reference numeral 309 denotes a read only memory (ROM) onto which data of a computer-generated hologram calculated beforehand with each pixel of the second liquid crystal display 6 being a sampling point is written, i.e., an applied voltage corresponding to the transmission coefficient of each pixel is written to perform a logarithmic polar coordinate transformation of an input image.

The operation of the conventional art optical information processing apparatus constructed as above is described. First, when an object is picked up by the TV camera 1, the image thereof is displayed on the first liquid crystal display 2. The first liquid crystal display 2 is irradiated by coherent beams emitted by the laser diode 3 and made to be parallel with each other by the collimator lens 4. At this time, the phase information of a phase filter to be optically transformed in logarithmic polar coordinate is displayed on the second liquid crystal display 6 in the form of a computer-generated hologram by spatially modulating the transmission coefficient of each pixel of the second crystal display 6 with data written onto the ROM 309 being an input signal to the second liquid crystal display 6. For example, the method for generating the phase information of a phase filter is described in "Real-time deformation invariant optical pattern recognition using coordinate transformations" written by David Casasent et al., APPLIED OPTICS, vol. 26, No. 5, 1 March, 1987.

Accordingly, the input image displayed on the first liquid crystal display 2 and the phase information to be transformed in logarithmic polar coordinate are superimposed on each other on the second liquid crystal display 6. Since the second liquid crystal display 6 is arranged on the first focal plane of the lens 7, the optical product of the input image of the object and the phase information to be transformed in the logarithmic polar coordinate is optically Fourier-transformed by the lens 7, and an image obtained by transforming the input image of the object in the logarithmic polar coordinate is detected by the photoelectric converting device 8.

In recognizing an object which flows on a line of, for example, a factory, the object can be accurately recognized by performing a pattern matching of the object image and a reference pattern by additionally using an optical correlator in carrying out a logarithmic polar coordinate transformation method which uses the above-described conventional optical information processing apparatus. This is because the value of the object image relative to that of the reference pattern does not change even though the object makes a scale change or rotates.

As described above, a logarithmic polar coordinate transformation has invariability for the scale change or the rotational movement of the object, but does not have invariability for the parallel movement thereof. Therefore, the object cannot be accurately recognized when the object makes a parallel movement. Regarding this disadvantage, it is known that the value of the object image relative to that of the reference pattern is not changed by performing a pattern matching by Fourier-transforming an input image and then transforming the Fourier-transformed input image in logarithmic polar coordinate even though the object makes a scale change, a rotational movement or a parallel movement. Thus, the object can be accurately recognized.

However, according to the construction as described above, the intensity of the coordinate-transformed image becomes lower as approaching the origin of logarithmic polar coordinate and becomes higher in being far from the origin thereof and thus an intensity gradient is generated, and therefore, the accuracy of the coordinate transformation is deteriorated.

In addition, when the above construction is used as the pre-processing of the pattern matching, a vision recognition cannot be performed accurately because the accuracy of the coordinate-transformed is unfavorable.

In view of the above-described disadvantages, it is an object of the present invention to eliminate the generation of the intensity gradient of a coordinate-transformed image which occurs according to the distance between the object image and the origin of logarithmic polar coordinate and make an accurate logarithmic polar coordinate transformation and vision recognition.

## SUMMARY OF THE INVENTION

Accordingly, an object of the present invention is to provide a LOGARITHMIC POLAR COORDINATE TRANSFORMING METHOD, a VISION RECOGNIZING METHOD, AND an OPTICAL INFORMATION PROCESSING APPARATUS to solve the above-described disadvantages, in transforming the information (f) of an input image in logarithmic polar coordinate, amplitude information (T) which changes in amplitude according to the distance between each point composing the amplitude information (T) and origin of logarithmic polar coordinate is multiplied by the information (f) of the input image and the phase information (A), and then, the product thus obtained is Fourier-transformed.

In accomplishing these and other objects, according to one aspect of the present invention, there is provided a logarithmic polar coordinate transforming method comprising the steps of:

storing information (f) of an input image;
generating complex amplitude information (f * A * T) based on the information (f) of the input image, phase information (A), and amplitude information (T), an amplitude of which changes according to distance between each point composing the amplitude information (T) and origin of logarithmic polar coordinate; and
Fourier-transforming the complex amplitude information (f * A * T).

According to another aspect to the present invention, there is provided a vision recognizing method including the logarithmic polar coordinate transforming method.

According to a further aspect of the present invention, there is provided an optical information processing apparatus including a light source, a spatial light modulating element irradiated by a beam emitted form the light source to display information of an input image, a lens for Fourier-transforming information, and a photoelectric converting device for receiving the information.

Owing to the above means, the present invention is capable of performing a logarithmic polar coordinate transformation with an intensity gradient reduced wherever the image to be coordinate-transformed is positioned on logarithmic polar coordinate.

## BRIEF DESCRIPTION OF THE DRAWINGS

These and other aspects and features of the present invention will become clear from the following description taken in conjunction with the preferred embodiments thereof with reference to the accompanying drawings throughout which like parts are designated by like reference numerals, and in which:

Fig. 1 is a fundamental construction view of an optical information processing apparatus for performing a logarithmic polar coordinate transformation according to a first embodiment of the present invention;
Fig. 2 is a fundamental construction view of an optical information processing apparatus for performing a logarithmic polar coordinate transformation according to a second embodiment of the present invention;
Fig. 3 is a fundamental construction view of an optical information processing apparatus for performing a vision recognition according to a third embodiment of the present invention;
Fig. 4 is a view showing a procedure for generating data of an applied voltage recorded in a memory;
Fig. 5 is a fundamental construction view of a conventional optical information processing apparatus for performing a vision recognition;
Fig. 6 is a fundamental construction view of an optical information processing apparatus for performing a vision recognition according to a fourth embodiment of the present invention;
Fig. 7 is a fundamental construction view of a conventional optical information processing apparatus; and
Figs. 8-10 are respectively fundamental construction views of optical information processing apparatus for performing vision recognition according to another embodiments of the present invention.

## DETAILED DESCRIPTION OF THE PREFERRED EMBODIMENTS

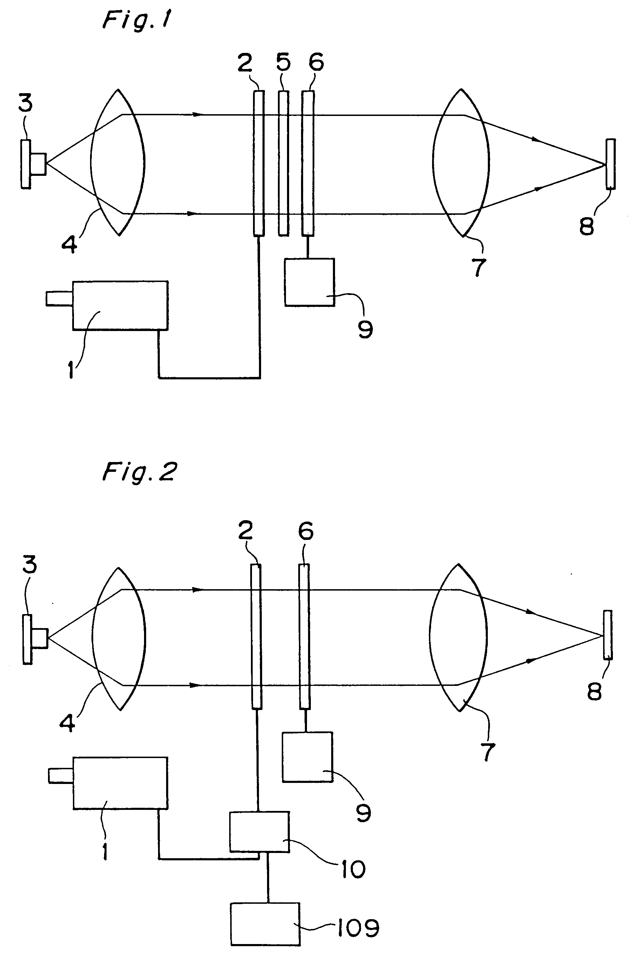

A logarithmic polar coordinate transforming method, a vision recognizing method, and an optical information processing apparatus according to an embodiment of the present invention are described below with reference to the drawings. Fig. 1 shows the fundamental construction of the optical information processing apparatus for carrying out the logarithmic polar coordinate transforming method according to the embodiment of the first invention. In Fig. 1, the same parts as those of the conventional art are denoted by the same reference numerals and the description thereof is omitted. This embodiment is essentially different from the conventional art in that an amplitude filter 5 is provided between the first liquid crystal display 2 and the second liquid crystal display 6. The amplitude filter 5 is composed of an ND filter (neutral density filter), the transmission coefficient of which changes by changing the thickness of an evaporating film formed on a glass substrate, according to the distance between each point composing the amplitude information (T) and origin of logarithmic polar coordinate. In other words, for example, the transmission coefficient of the filter in each point composing the amplitude information (T) is expressed by a reciprocal of the distance between the point and the center of the amplitude information (T) when the center of the amplitude information (T) coincides with the center of the filter.

The operation of the optical information processing apparatus constructed as above is described. First, when an object is picked up by the TV camera 1, the image thereof is displayed on the first liquid crystal display 2. The first liquid crystal display 2 is irradiated by coherent beams emitted by the laser diode 3 and made to be parallel with each other by the collimator lens 4.

At this time, data written onto the memory 9 is inputted to the second liquid crystal display 6 and phase information (A) which is to be optically transformed in logarithmic polar coordinate is displayed on the second liquid crystal display 6 in the form of a computer-generated hologram by spatially modulating the transmission coefficient of each pixel of the second liquid crystal display 6. Accordingly, information (f) of the input image of the object displayed on the first liquid crystal display 2, amplitude information (T) of the amplitude filter 5 in which the transmission coefficient changes according to the distance between each point composing the amplitude information (T) and origin of logarithmic polar coordinate, and the phase information (A) which is to be transformed in logarithmic polar coordinate are superimposed on each other on the second liquid crystal display 6, namely, (f * A * T). Since the second liquid crystal display 6 is arranged on the first focal plane of the lens 7, the information (f * A * T) on the second liquid crystal display 6 is optically Fourier-transformed by the lens 7 and an image CT (f) {= FT (f * T * A)} obtained by transforming the input image (f) of the object in logarithmic polar coordinate is detected by the photoelectric converting device 8 (In the above, CT (f) is the transformation of (f) in logarithmic polar coordinate and FT (f * T * A) is the Fourier transformation of (f * T * A)).

As described above, according to this embodiment, the generation of the intensity gradient of the coordinate-transformed image according to the distance from the origin of the logarithmic polar coordinate is removed by using the amplitude filter 5, the transmission coefficient of which changes according to the distance between each point composing the amplitude information (T) and origin of logarithmic polar coordinate. Thus, a logarithmic polar coordinate transformation can be performed precisely.

According to this embodiment, the amplitude filter 5 is used to add the amplitude information (T), the amplitude of which changes according to the distance between each point composing the amplitude information (T) and origin of logarithmic polar coordinate, but instead, data (A * T) obtained by multiplying the phase information (A) to be transformed in logarithmic polar coordinate by the amplitude information (T) is stored in the memory 9, a computer-generated hologram is produced, and then the hologram is displayed on the second liquid crystal display 6, and the information (A * T) is multiplied by the information (f) of the input image so as to perform a Fourier transformation. Thus, a similar effect can be obtained.

It is also possible to perform a pattern matching of the input image (f) and the reference pattern (h) by multiplying the image (f * T * A) obtained according to this embodiment by Fourier-transforming the image obtained as a result of the transformation of the input image in logarithmic polar coordinate by the reference pattern (h), the amplitude information (T), and the phase information (A) so as to produce (f * T * A * h * T * A) and then, Fourier-transforming the product (f * T * A * h * T * A).

Fig. 2 shows the fundamental construction of an optical information processing apparatus for carrying out the logarithmic polar coordinate transforming method according to another embodiment of the present invention. In this embodiment, instead of the amplitude filter of the above-described embodiment, there are provided a second memory 109 in which the amplitude information (T) is recorded and in addition, a signal converting means 10. The information (f) of the input image sent from the TV camera 1 is electrically multiplied by the amplitude information (T) sent from the second memory 109 by means of the signal converting means 10, the information of (f * T) is displayed on the first liquid crystal display 2, and the information (f * T) is multiplied by the phase information (A) on the second liquid crystal display 6, and information (f * T * A) thus obtained is Fourier-transformed by the lens 7. Thus, a similar effect can be obtained.

In these embodiments, the image sent from the TV camera 1 is used as it is, but needless to say, a similar effect can be obtained by using a transformed image such as an optically or electrically Fourier-transformed image.

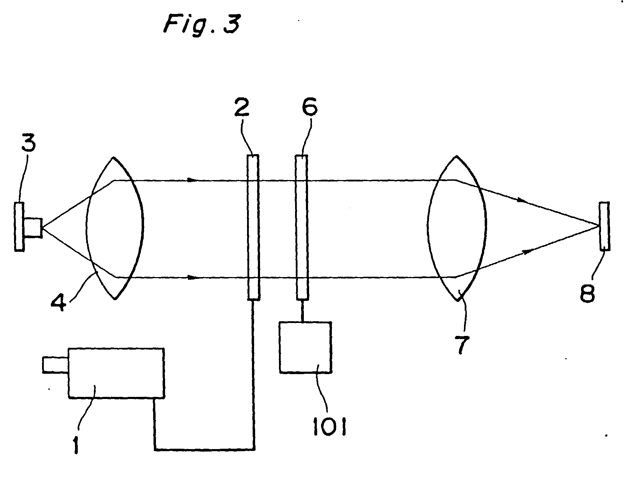

Fig. 3 shows the fundamental construction of an optical information processing apparatus for carrying out a vision recognizing method according to an embodiment of the present invention. The same parts as those of the conventional art are denoted by the same reference numerals and the description thereof is omitted. The essential difference between this embodiment and the conventional art is that this embodiment is provided with a memory 101. There is written onto the memory 101 the data of a computer-generated hologram produced based on information (A * A * h * T * T) obtained by the product of the square (A * A) of the phase information (A), the reference pattern (h), and the square (T * T) of the amplitude information (T), the amplitude of which changes according to the distance between each point composing the amplitude information (T) and origin of logarithmic polar coordinate. That is, data of an applied voltage corresponding to the transmission coefficient of each pixel of the second liquid crystal display 6 is written onto the memory 101.

The phase information (A) of the input image to be transformed in the logarithmic polar coordinate is recorded in the ROM 309 of the conventional art shown in Fig. 7. The ROM 309 has the function of only transforming an input image in logarithmic polar coordinate while the function of the memory 101 according to this embodiment is quite different from the ROM 309 of the conventional art in that the memory 101 has a function of transforming an input image in logarithmic polar coordinate and operating as a matched filter for performing a correlation operation of the input image and the reference pattern.

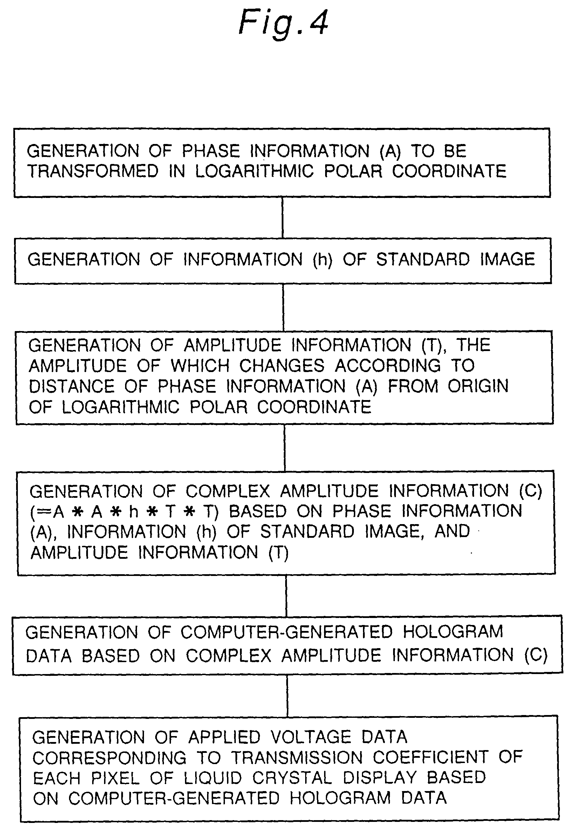

The operation of the optical information processing apparatus constructed as above is described. When the object is picked up by the TV camera 1, the image (f) thereof is displayed on the first liquid crystal display 2. The first liquid crystal display 2 is irradiated by coherent beams emitted by the laser diode 3 and made to be parallel with each other by the collimator lens 4. The method for producing a computer-generated hologram to be displayed at this time on the second liquid crystal display 6 is described with reference to Fig. 4. First, using an external computer, the phase information (A) to be transformed in the logarithmic polar coordinate is generated. Next, the information (h) of the reference pattern is generated and then, the amplitude information (T), the amplitude of which changes according to the distance between each point composing the amplitude information (T) and origin of logarithmic polar coordinate is generated. Then, there is written onto the memory 101 complex amplitude information (C) (= A * A * h * T * T) which is the product of the square (A * A) of the Phase information (A) to be transformed in the logarithmic polar coordinate, the reference pattern (h), and the square (T * T) of the amplitude information (T), the amplitude of which changes according to the distance between each point composing the amplitude information (T) and origin of logarithmic polar coordinate. An input signal based on this data spatially modulates the transmission coefficient of each pixel of the second liquid crystal display 6. Thus, the complex amplitude information (C) is displayed on the second liquid crystal display 6 in the form of a computer-generated hologram. Since the first and second liquid crystal displays are irradiated by beams emitted by a light source, the information (f) of the input image of the object displayed on the first liquid crystal display 2 and the complex amplitude information (C) (= A * A * h * T * T) displayed on the second liquid crystal display 6 are superimposed on each other on the second liquid crystal display 6 and optically multiplied and thus, the result is f * C (= f * A * T * h * A * T).

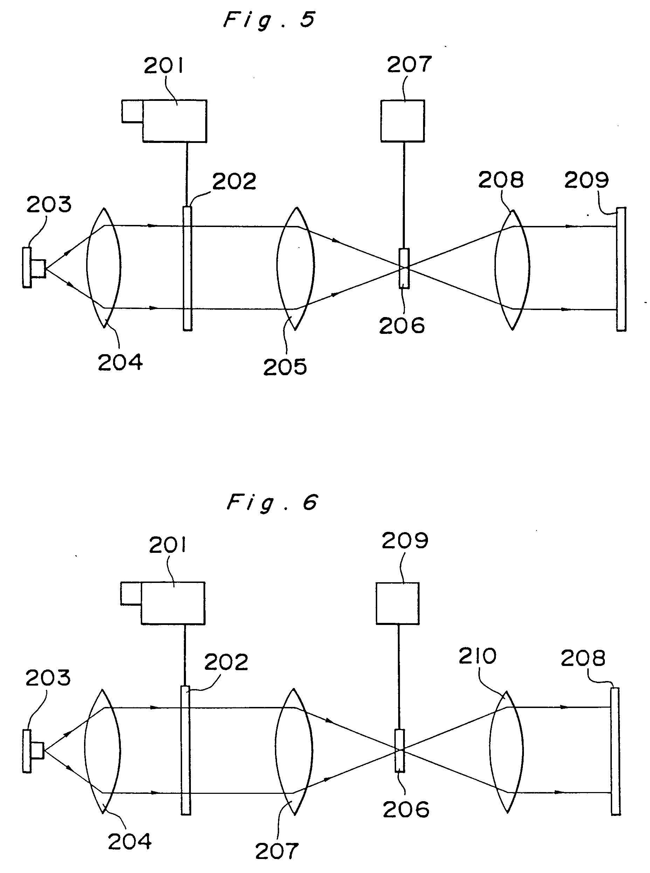

In order to describe the condition of (f * C), an example of the method for performing a vision recognition, namely, the pattern matching of the input image (f) and the reference pattern (h) is shown in Fig. 5. In Fig. 5, the input image picked up by a TV camera 201 is displayed on a first liquid crystal display 202 which is irradiated by beams emitted from a light source including a laser diode 203 and a collimator lens 204 and optically Fourier-transformed by a first lens 205. At this time, information is displayed in the form of a computer-generated hologram on a second liquid crystal display 206 based on the information of the Fourier-transformed reference pattern written onto a memory 207. The information of the Fourier-transformed reference pattern and the information of the Fourier-transformed input image are superimposed on each other on the second liquid crystal display 206 and optically multiplied. The product thus obtained is optically Fourier-transformed by a second lens 208. As a result, as known as optical pattern matching, if the input image coincides with the reference pattern, a luminescent spot is generated and detected by a photoelectric converting device 209. Thus, a vision recognition, namely, the pattern matching of the input image and the reference pattern is carried out. The above is an example of the conventional vision recognizing method.

According to this embodiment, since not only the above-described vision recognition, but also a logarithmic polar coordinate transformation is also performed, the image CT (f) obtained by transforming the information (f) of the input image in logarithmic polar coordinate is Fourier-transformed to obtain FT {CT (f)}, and then FT {CT (f)} is optically multiplied by the Fourier-transformed image FT{CT(h)} obtained by Fourier-transforming the image {CT (h)} obtained by transforming the information (h) of the reference pattern in logarithmic polar coordinate to obtain FT {CT (f)} * FT {CT(h)}, and FT {CT (f)} * FT {CT(h)} is Fourier-transformed. As shown in the first embodiment, CT (f) and CT (h) mean FT (f * A * T) and FT (h * A * T), respectively. Therefore, the Fourier-transformed image of each image transformed in logarithmic polar coordinate is expressed as follows: FT {CT (f)} = FT {FT (f * A * T)} = f * A * T, FT {CT (h)} = FT {FT (h * A * T)} = h * A * T (Even though Fourier transformations are performed twice, an image is inverted and information does not change).

Accordingly, the Fourier transformation of the data f * C (= f * A * T * h * A * T) on the second liquid crystal display 6 performed by means of the lens 7 in Fig. 3 is equivalent to the Fourier transformation of the product of (f * A * T) and (h * A * T), which means a pattern matching of the image obtained by transforming the input image (f) of the object in logarithmic polar coordinate and the image obtained by transforming the reference pattern (h) in logarithmic polar coordinate.

In Fig. 3, since the second liquid crystal display 6 is arranged on the first focal plane of the lens 7, the data (f * C) on the second liquid crystal display 6 is optically Fourier-transformed by the lens 7. If the object coincides with the reference pattern, a luminescent spot is generated on the second focal plane of the lens 7 and detected by the photoelectric converting device 8.

As described above, according to this embodiment, a logarithmic polar coordinate transformation can be performed precisely and in addition, an accurate pattern matching, namely, a vision recognition can be performed by using the amplitude information (T), the amplitude of which changes depending on the distance between each point composing the amplitude information (T) and origin of logarithmic polar coordinate and removing the intensity gradient of the coordinate-transformed image which occurs according to the distance between each point composing the amplitude information (T) and origin of logarithmic polar coordinate.

Further, according to this embodiment, much information is written onto the memory 101, the construction of the apparatus can be made to be very simple.

Using an apparatus of the construction as shown in Fig. 3, a logarithmic polar coordinate transformation similar to that of the above-described embodiment may be performed by outputting the product (A * T) of the phase information (A) and the amplitude information (T) to the memory 101.

Fig. 6 shows the fundamental construction of an optical information processing apparatus for carrying out the vision recognizing method according to an embodiment of the present invention. In Fig. 6, reference numeral 201 denotes a TV camera; 202 denotes a first liquid crystal display which displays an image picked up by the TV camera 201; 204 denotes a collimator lens which makes beams emitted by a laser diode 203 parallel with each other; 207 denotes a first lens. The first liquid crystal display 202 is arranged on the first focal plane of the first lens 207. Reference numeral 206 denotes a second liquid crystal display arranged on the second focal plane of the first lens 207. Reference numeral 209 denotes a memory onto which data of a computer-generated hologram generated based on information (A * A * H * T * T) which is the product of the square (A * A) of the phase information (A), the Fourier-transformed information (H) of the reference pattern, and the square (T * T) of the amplitude information (T), the amplitude of which changes according to the distance between each point composing the amplitude information (T) and origin of logarithmic polar coordinate is written, i.e., data of an applied voltage corresponding to the transmission coefficient of each pixel of the second liquid crystal display 206 is written. Reference numeral 210 denotes a second lens and the second liquid crystal display 206 is arranged on the first focal plane of the second lens 210. Reference numeral 208 denotes a photoelectric converting device arranged on the second focal plane of the second lens 210.

The operation of the optical information processing apparatus constructed as above is described. First, when the object is picked up by the TV camera 201, the image thereof is displayed on the first liquid crystal display 202. The first liquid crystal display 202 is irradiated by coherent beams emitted by the laser diode 203 and made to be parallel with each other by the collimator lens 204. Since the first liquid crystal display 202 is arranged on the first focal plane of the first lens 207, the object image is optically Fourier-transformed by the first lens 207 and a Fourier-transformed image (F) is formed on the second focal plane of the first lens 207, namely, on the second liquid crystal display 206.

At this time, the method for producing a computer-generated hologram to be displayed on the second liquid crystal display 206 is carried out similarly to the embodiments previously described. As a result, data which is the product of the Fourier-transformed image (F) of the object displayed on the first liquid crystal display 202, the square (A * A) of the phase information (A) to be transformed in logarithmic polar coordinate, the Fourier-transformed image (H) of the reference pattern, and the square (T * T) of the amplitude information (T), the amplitude of which changes according to the distance between each point composing the amplitude information (T) and origin of logarithmic polar coordinate is superimposed on each other on the second liquid crystal display 206, and the result is F * C (= F * A * T * h * A * T).

It is understood for the reason similar to the embodiments previously described, the condition of (F * C) is the product of the Fourier-transformed image FT {CT (F)} of the image CT (F) obtained by transforming the information, of the Fourier-transformed input image (F), in logarithmic polar coordinate and the Fourier-transformed image FT {CT (H)} of the image CT (H) obtained by transforming the information, of the Fourier-transformed reference pattern (H), in logarithmic polar coordinate.

Since the second liquid crystal display 206 is arranged on the first focal plane of the second lens 210, the data F * C (= FT {CT (F)} * FT {CT (H)}) on the second liquid crystal display 206 is optically Fourier-transformed by the second lens 210. Accordingly, as known as optical pattern matching, if the object coincides with the reference pattern, a luminescent spot is generated on the second focal plane of the second lens 210 and detected by the photoelectric converting device 208.

As described above, the input image is Fourier-transformed beforehand, and then, a transformation is performed in logarithmic polar coordinate. Thus, the logarithmic polar coordinate transformation has invariability not only for the magnification change of the input image and the rotational change thereof, but also for the movement of the object to be picked up. Therefore, an accurate vision recognition can be performed.

According to this embodiment, a transformation can be precisely performed in logarithmic polar coordinate and in addition, a visible recognition can be performed, by using the amplitude information (T), the amplitude of which changes according to the distance between each point composing the amplitude information (T) and origin of logarithmic polar coordinate and removing the intensity gradient of the coordinate-transformed image which occurs according to the distance between each point composing the amplitude information (T) and origin of logarithmic polar coordinate.

A logarithmic polar coordinate transformation having an effect similar to the first embodiment can be performed by providing an amplitude filter similar to that of Fig. 1 on the light source of the second liquid crystal display 206 provided in the apparatus of this embodiment, writing data based on the phase information (A) onto the memory 209, generating (F * A * T) on the second liquid crystal display 206, and Fourier-transforming (F * A * T) by the second lens 210.

In the above embodiments, the liquid crystal display of electric writing type is used as the first and second spatial light modulating elements, but a liquid crystal device of optical writing type or a spatial light modulating element composed of an optical crystal such as an optical crystal of BSO may be used.

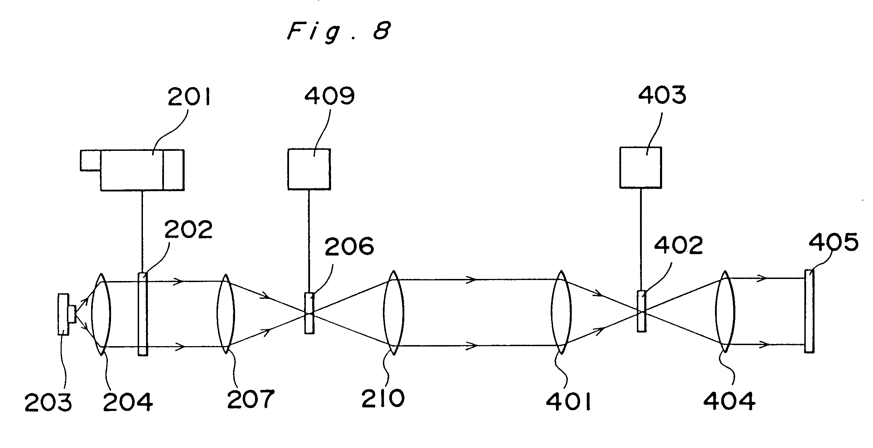

Fig. 8 shows the fundamental construction of an optical information processing apparatus for carrying out the vision recognizing method according to an embodiment of the present invention. In Fig. 8, reference numeral 201 denotes the TV camera; 202 denotes the first liquid crystal display which displays an image picked up by the TV camera 201; 204 denotes the collimator lens which makes beams emitted by the laser diode 203 parallel with each other; 207 denotes the first lens. The first liquid crystal display 202 is arranged on the first focal plane of the first lens 207. Reference numeral 206 denotes the second liquid crystal display arranged on the second focal plane of the first lens 207. Reference numeral 409 denotes a first memory into which data (A * T) obtained by multiplying the phase information (A) to be transformed in logarithmic polar coordinate by the amplitude information (T) is stored. That is, data (A * T) obtained by multiplying the phase information (A) to be transformed in logarithmic polar coordinate by the amplitude information (T) is stored in the memory 409, a computer-generated hologram is produced, and then the hologram is displayed on the second liquid crystal display 206. Then, a Fourier-transformed information (F) of an input image picked up by the camera 201 is multiplied by the data (A * T) to obtain and display a complex amplitude information (F * A * T) on the second liquid crystal display 206. The information (F * A * T) is Fourier-transformed by the second lens 210. The second liquid crystal display 206 is arranged on the first focal plane of the second lens 210. Reference numeral 401 denotes a third lens. Reference numeral 402 denotes a third liquid crystal display arranged on the second focal plane of the third lens 401. Reference numeral 403 denotes a second memory into which data (H * A * T) obtained by multiplying a Fourier-transformed information (H) of the reference pattern, the phase information (A), and the amplitude information (T) is stored. That is, data (H * A * T) obtained by multiplying the Fourier-transformed information (H) of the reference pattern by the phase information (A) to be transformed in logarithmic polar coordinate and the amplitude information (T) is stored in the memory 403, a computer-generated hologram is produced, and then the hologram is displayed on the third liquid crystal display 402. Then, the information (F * A * T) is multiplied by the information (H * A * T) to obtain and display a second complex amplitude information (F * A * T * H * A * T) on the second liquid crystal display 206. Then, the information (H * A * T * H * A * T) is Fourier-transformed by a fourth lens 404. Therefore, the third liquid crystal display 402 is arranged on the first focal plane of the fourth lens 404. Reference numeral 405 denotes a photoelectric converting device arranged on the second focal plane of the fourth lens 404.

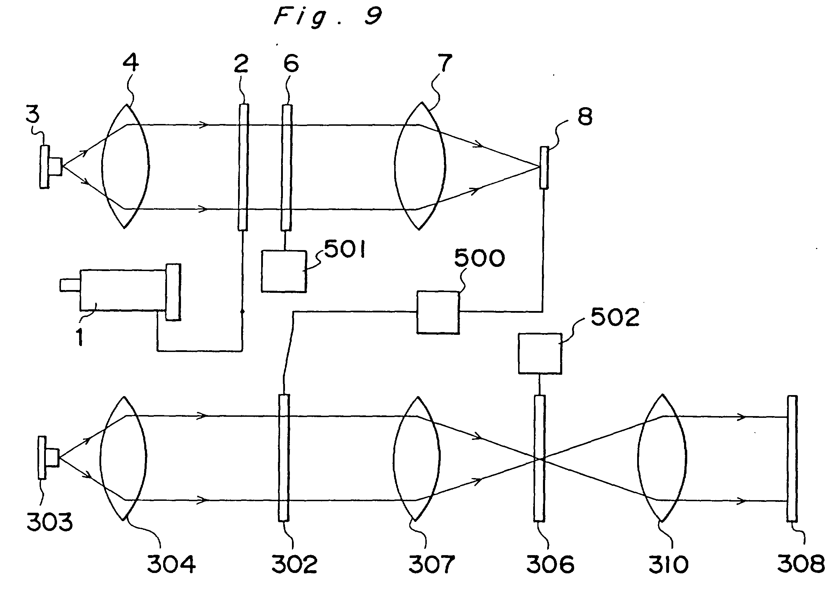

Fig. 9, shows the fundamental construction of an optical information processing apparatus for carrying out the vision recognizing method according to an embodiment of the present invention. In Fig. 9, the optical information processing apparatus includes: the first liquid crystal display 2, the second liquid crystal display 6 to display information (A * T) in the form of a computer-generated hologram, the first laser diode 3 for irradiating the first and second liquid crystal displays 2 and 6, the first lens 7, and the first photoelectric converting device 8 arranged at the first focal plane of the first lens 7. The apparatus also includes a signal converting means 500 for connecting the first photoelectric converting device 8 and the third liquid crystal display 302 to receive a signal from the first photoelectric converting device 8 and output a signal to the third liquid crystal display 302. The optical information processing apparatus further includes an optical correlator. The optical correlator includes the third liquid crystal display 302 for receiving the signal from the signal converting device 500 and displaying a transformed input image in logarithmic polar coordinate thereon, a second laser diode 303 for irradiating the third liquid crystal display 302, a second lens 307, a fourth liquid crystal display 306, a third lens 310, and a second photoelectric converting device 308. The second lens 307 has the first focal plane thereof at a plane on which the third liquid crystal display 302 is positioned. The fourth liquid crystal display 306 positioned at the second focal plane of the second lens 307 displays in the form of a computer-generated hologram, information based on information (h * A * T) obtained by the product of information (h) of a reference pattern, phase information (A), and amplitude information (T), an amplitude of which changes according to distance between each point composing the amplitude information (T) and origin of logarithmic polar coordinate. The third lens 310 has the first focal plane thereof at a plane on which the fourth liquid crystal display 306 is positioned. The second photoelectric converting device 308 is arranged at the second focal plane of the third lens 310.

In operation, the first memory 501 stores the information (A * T). That is, data (A * T) obtained by multiplying the phase information (A) to be transformed in logarithmic polar coordinate by the amplitude information (T) is stored in the memory 501, a computer-generated hologram is produced, and then the hologram is displayed on the first liquid crystal display 6. Then, first complex amplitude information (f * A * T) is generated based on the information (f) of the input image picked up by the camera 1, phase information (A) in the first memory 501, and amplitude information (T) in the first memory 501, an amplitude of which changes according to distance between each point composing the amplitude information (T) and origin of logarithmic polar coordinate. The first complex amplitude information (f * A * T) is Fourier-transformed by the first lens 7 to generate an image, transformed in logarithmic polar coordinate, of the input image. Then, second complex amplitude information (f * A * T * h * A * T) is obtained by multiplying the information (f * A * T), of the Fourier-transformed image generated as a result of the transformation of the input image in logarithmic polar coordinate, by information (h) of a reference pattern, the phase information (A), and the amplitude information (T). The second read only memory 502 stores the information (h) of the reference pattern, the phase information (A), and the amplitude information (T), similarly to the above embodiment. That is, data (h * A * T) obtained by multiplying the information (h) of the reference pattern by the phase information (A) to be transformed in logarithmic polar coordinate and the amplitude information (T) is stored in the memory 502, a computer-generated hologram is produced, and then the hologram is displayed on the fourth liquid crystal display 306. The second complex amplitude information (f * A * T * h * A * T) is Fourier-transformed by the third lens 310.

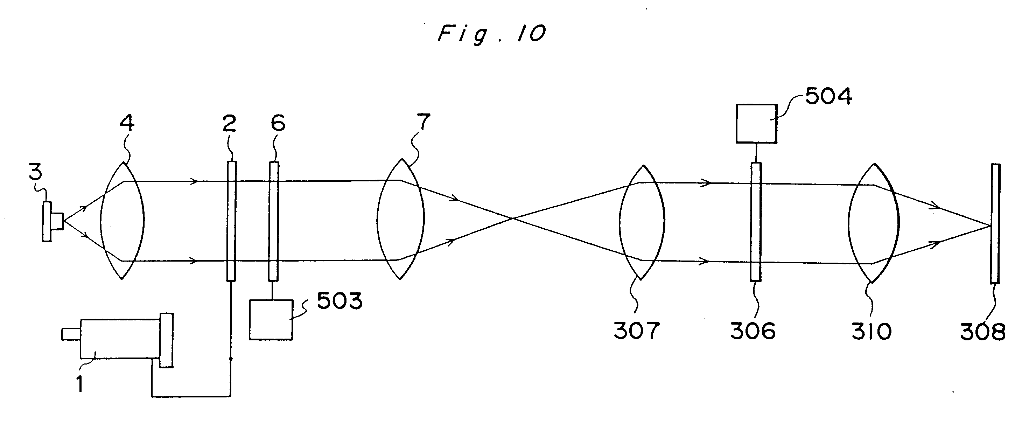

In Fig. 9, it is possible to perform the similar effect without converting a beam into a signal by providing the second laser diode 303, the second collimator lens 304, the first photoelectric converting device 8, the signal converting means 500, and the third liquid crystal display 302. That is, as shown in Fig. 10, the second focal plane of the first lens 7 coincides with the first focal plane of the second lens to pass a beam with the Fourier-transformed information through the second lens 307.

As described above, according to the present invention, a transformation can be precisely performed in logarithmic polar coordinate by using the amplitude information (T), the amplitude of which changes according to the distance between each point composing the amplitude information (T) and origin of logarithmic polar coordinate and thus removing the intensity gradient of the coordinate-transformed image which occurs according to the distance of the input image from the origin of coordinate, and in addition, a vision recognition can be performed accurately by performing a pattern matching of the input image and the reference pattern by the use of the logarithmic polar coordinate transformation.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. A vision recognizing method comprising the steps of:

   storing information (f) of an input image;
   generating complex amplitude information (f *A *T *h *A * T) based on the information (f) of the input image, information (h) of a reference pattern, phase information (A), and amplitude information (T), an amplitude of which changes according to distance between each point composing the amplitude information (T) and origin of logarithmic polar coordinate; and
   Fourier-transforming the complex amplitude information (f * A * T * h *A *T).

2. A vision recognizing method comprising the steps of:

   storing Fourier-transformed information (F) of an input image;
   generating complex amplitude information (F *A *T * H * A * T) based on the information (F) of the input image, Fourier-transformed information (H) of a reference pattern, phase information (A), and amplitude information (T), an amplitude of which changes according to distance between each point composing the amplitude information (T) and origin of logarithmic polar coordinate; and
   Fourier-transforming the complex amplitude information (F * A * T * H * A *T).

3. A vision recognizing method comprising the steps of:

   storing Fourier-transformed information (F) of an input image;
   generating first complex amplitude information (F * A * T) based on the information (F) of the Fourier-transformed input image, phase information (A), amplitude information (T), an amplitude of which changes according to distance between each point composing the amplitude information (T) and origin of logarithmic polar coordinate;
   Fourier-transforming the first complex amplitude information (F * A * T) to generate an image obtained by transforming the Fourier-transformed input image in logarithmic polar coordinate;
   generating second complex amplitude information (F * A * T * H * A * T) obtained by multiplying the information (F * A * T), of an image obtained by Fourier-transforming the image generated as a result of the transformation of the input image in logarithmic polar coordinate, by Fourier-transformed information (H) of a reference pattern, the phase information (A), and the amplitude information (T); and
   Fourier-transforming the second complex amplitude information (F * A * T * H * A * T).

4. An optical information processing apparatus comprising:

a first light source (3);
a first spatial light modulating element (2), irradiated by a beam emitted from the first light source (3), for displaying information (f) of an input image;
a second spatial light modulating element (6), irradiated by a beam emitted from the light source (3), for displaying phase information (A) in the form of a computer-generated hologram;
an optical element (5), irradiated by a beam emitted from the first light source (3), generated based on amplitude information (T), an amplitude of which changes according to distance between each point composing the amplitude information (T) and origin of logarithmic polar coordinate;
a first lens (7) in which an element of the three elements (2, 6, 5) longest in an optical path length with respect to the first light source (3) is positioned at a first focal plane thereof; and
a first photoelectric converting device (8) arranged at a second focal plane of the first lens (7).

5. An optical information processing apparatus comprising:

a first spatial light modulating element (2);
a second spatial light modulating element (6) for displaying phase information (A) in the form of a computer-generated hologram;
a first light source (3) for irradiating the first and second spatial optical light elements (2, 6);
a first lens (7) in which an element of the two elements (2, 6) longest in an optical path length with respect to the first light source (3) is positioned at a first focal plane thereof;
a first photoelectric converting device (8) arranged at a second focal plane of the first lens (7); and
signal converting means (10) for converting an image to be inputted to the first spatial light modulating element (2) and displaying, on the first spatial light modulating element, information (T * f) obtained by multiplying amplitude information (T), an amplitude of which changes according to distance between each point composing the amplitude information (T) and origin of logarithmic polar coordinate, by information (f) of an input image.

6. An optical information processing apparatus comprising:

a first spatial light modulating element (2) for displaying information (f) of an input image;
a second spatial light modulating element (6) for displaying, in the form of a computer-generated hologram, information based on phase information (A) and amplitude information (T), an amplitude of which changes according to distance between each point composing the amplitude information (T) and origin of logarithmic polar coordinate;
a first light source (3) for irradiating the first and second spatial light modulating elements (2, 6);
a first lens (7) in which an element of the two elements (2, 6) longest in an optical path length with respect to the first light source (3) is positioned at a first focal plane thereof; and
a first photoelectric converting device (8) arranged at a second focal plane of the first lens (7).

7. An optical information processing apparatus comprising:

a first spatial light modulating element (202) for displaying an input image;
a first light source (203) for irradiating the first spatial light modulating element (202);
a first lens (207) having a first focal plane thereof at a plane on which the first spatial light modulating element (202) is positioned;
a second spatial light modulating element (206) for displaying, in the form of a computer-generated hologram, information based on phase information (A) and amplitude information (T), an amplitude of which changes according to distance between each point composing the amplitude information (T) and origin of logarithmic polar coordinate;
a second lens (210) having a first focal plane thereof at a plane on which the second spatial light modulating element (206) is positioned; and
a first photoelectric converting device (208) arranged at a second focal plane of the second lens (210).

8. An optical information processing apparatus comprising:

a first spatial light modulating element for displaying information (f) of an input image;
a first light source for irradiating the first spatial light modulating element;

a first lens having a first focal plane thereof at a plane on which the first spatial light modulating element is positioned;

a coordinate transforming means comprising a second spatial light modulating element and an optical element, the second spatial light modulating element being positioned on a second focal plane of the first lens, for displaying phase information (A) in the form of a computer-generated hologram, the optical element being formed based on amplitude information (T), an amplitude of which changes according to distance between each point composing the amplitude information (T) and origin of logarithmic polar coordinate;

a second lens having a first focal plane thereof at a plane on which the coordinate transforming section is positioned; and

a first photoelectric converting device arranged at a second focal plane of the second lens.

9. The optical information processing apparatus as claimed in any one of claims 4-8, further comprising a signal converting device (500) for receiving a signal outputted from the first photoelectric converting device and outputting the signal, and an optical correlator comprising:

a third spatial light modulating element (302) for receiving the signal from the signal converting device (500) and displaying an input image;

a second light source (303) for irradiating the third spatial light modulating element (302);

a second lens (307) having a first focal plane thereof at a plane on which the third spatial light modulating element (303) is positioned;

a fourth spatial light modulating element (306) for displaying, in the form of a computer-generated hologram, information based on phase information (A) and amplitude information (T), an amplitude of which changes according to distance between each point composing the amplitude information (T) and origin of logarithmic polar coordinate;

a third lens (310) having a first focal plane thereof at a plane on which the fourth spatial light modulating element (306) is positioned; and

a second photoelectric converting device (308) arranged at a second focal plane of the third lens (310).

10. An optical information processing apparatus comprising:

a first light source (3);

a first spatial light modulating element (2), irradiated by a beam emitted from the first light source (3), for displaying information (f) of an input image;

a second spatial light modulating element (6), irradiated by a beam emitted from the light source (3), for displaying phase information (A) in the form of a computer-generated hologram;

an optical element (5), irradiated by a beam emitted from the first light source (3), generated based on amplitude information (T), an amplitude of which changes according to distance between each point composing the amplitude information (T) and origin of logarithmic polar coordinate;

a first lens (7) in which an element of the three elements (2, 6, 5) longest in an optical path length with respect to the first light source (3) is positioned at a first focal plane thereof; and

an optical correlator comprising:

a second lens (307) having a first focal plane thereof at a plane on which the second focal plane of the first lens is positioned;

a third spatial light modulating element (306) for displaying, in the form of a computer-generated hologram, information based on phase information (A) and amplitude information (T), an amplitude of which changes according to distance between each point composing the amplitude information (T) and origin of logarithmic polar coordinate;

a third lens (310) having a first focal plane thereof at a plane on which the fourth spatial light modulating element (306) is positioned; and

a second photoelectric converting device (308) arranged at a second focal plane of the third lens (310).

11. An optical information processing apparatus comprising:

a first spatial light modulating element (2);

a second spatial light modulating element (6) for displaying phase information (A) in the form of a computer-generated hologram;

a first light source (3) for irradiating the first and second spatial optical light elements (2, 6);

a lens (7) in which an element of the two elements (2, 6) longest in an optical path length with respect to the first light source (3) is positioned at a first focal plane thereof;

a first photoelectric converting device (8) arranged at a second focal plane of the first lens (7);

signal converting means (10) for converting an image to be inputted to the first spatial light modulating element (2) and displaying, on the first spatial light modulating element, information (T * f) obtained by multiplying amplitude information (T), an amplitude of which changes according to distance between each point composing the amplitude information (T) and origin of logarithmic polar coordinate, by information (f) of an input image; and

an optical correlator comprising:

> a second lens (307) having a first focal plane thereof at a plane on which the second focal plane of the first lens is positioned;
>
> a third spatial light modulating element (306) for displaying, in the form of a computer-generated hologram, information based on phase information (A) and amplitude information (T), an amplitude of which changes according to distance between each point composing the amplitude information (T) and origin of logarithmic polar coordinate;
>
> a third lens (310) having a first focal plane thereof at a plane on which the fourth spatial light modulating element (306) is positioned; and
>
> a second photoelectric converting device (308) arranged at a second focal plane of the third lens (310).

**12.** An optical information processing apparatus comprising:

> a first spatial light modulating element (2) for displaying information (f) of an input image;
>
> a second spatial light modulating element (6) for displaying, in the form of a computer-generated hologram, information based on phase information (A) and amplitude information (T), an amplitude of which changes according to distance between each point composing the amplitude information (T) and origin of logarithmic polar coordinate;
>
> a first light source (3) for irradiating the first and second spatial light modulating elements (2, 6);
>
> a first lens (7) in which an element of the two elements (2, 6) longest in an optical path length with respect to the first light source (3) is positioned at a first focal plane thereof; and
>
> an optical correlator comprising:
>
>> a second lens (307) having a first focal plane thereof at a plane on which the second focal plane of the first lens is positioned;
>>
>> a third spatial light modulating element (306) for displaying, in the form of a computer-generated hologram, information based on phase information (A) and amplitude information (T), an amplitude of which changes according to distance between each point composing the amplitude information (T) and origin of logarithmic polar coordinate;
>>
>> a third lens (310) having a first focal plane thereof at a plane on which the fourth spatial light modulating element (306) is positioned; and
>>
>> a second photoelectric converting device (308) arranged at a second focal plane of the third lens (310).

**13.** An optical information processing apparatus comprising:

> a first spatial light modulating element (202) for displaying an input image;
>
> a first light source (203) for irradiating the first spatial light modulating element (202);
>
> a first lens (207) having a first focal plane thereof at a plane on which the first spatial light modulating element (202) is positioned;
>
> a second spatial light modulating element (206) for displaying, in the form of a computer-generated hologram, information based on phase information (A) and amplitude information (T), an amplitude of which changes according to distance between each point composing the amplitude information (T) and origin of logarithmic polar coordinate;
>
> a second lens (210) having a second focal plane thereof at a plane on which the second spatial light modulating element (206) is positioned; and
>
> an optical correlator comprising:
>
>> a second lens (307) having a first focal plane thereof at a plane on which the second focal plane of the first lens is positioned;
>>
>> a third spatial light modulating element (306) for displaying, in the form of a computer-generated hologram, information based on phase information (A) and amplitude information (T), an amplitude of which changes according to distance between each point composing the amplitude information (T) and origin of logarithmic polar coordinate;

a third lens (310) having a first focal plane thereof at a plane on which the fourth spatial light modulating element (306) is positioned; and

a second photoelectric converting device (308) arranged at a second focal plane of the third lens (310).

14. An optical information processing apparatus comprising:

a first spatial light modulating element for displaying information (f) of an input image;

a first light source for irradiating the first spatial light modulating element;

a first lens having a first focal plane thereof at a plane on which the first spatial light modulating element is positioned;

a coordinate transforming means comprising a second spatial light modulating element and an optical element, the second spatial light modulating element being positioned on a second focal plane of the first lens, for displaying phase information (A) in the form of a computer-generated hologram, the optical element being formed based on amplitude information (T), an amplitude of which changes according to distance between each point composing the amplitude information (T) and origin of logarithmic polar coordinate;

a second lens having a first focal plane thereof at a plane on which the coordinate transforming section is positioned; and

an optical correlator comprising:

a second lens (307) having a first focal plane thereof at a plane on which the second focal plane of the first lens is positioned;

a third spatial light modulating element (306) for displaying, in the form of a computer-generated hologram, information based on phase information (A) and amplitude information (T), an amplitude of which changes according to distance between each point composing the amplitude information (T) and origin of logarithmic polar coordinate;

a third lens (310) having a first focal plane thereof at a plane on which the fourth spatial light modulating element (306) is positioned; and

a second photoelectric converting device (308) arranged at a second focal plane of the third lens (310).

15. The optical information processing apparatus as claimed in any one of claims 4-8,
wherein at least one of the first spatial light modulating element and second spatial light modulating element is composed of a liquid crystal display.

*Fig. 1*

*Fig. 2*

13

Fig. 3

# Fig.4

```
┌─────────────────────────────────────────────────────────┐
│ GENERATION OF PHASE INFORMATION (A) TO BE                │
│ TRANSFORMED IN LOGARITHMIC POLAR COORDINATE              │
└─────────────────────────────────────────────────────────┘
                            │
┌─────────────────────────────────────────────────────────┐
│ GENERATION OF INFORMATION (h) OF STANDARD IMAGE          │
└─────────────────────────────────────────────────────────┘
                            │
┌─────────────────────────────────────────────────────────┐
│ GENERATION OF AMPLITUDE INFORMATION (T), THE             │
│ AMPLITUDE OF WHICH CHANGES ACCORDING TO                  │
│ DISTANCE OF PHASE INFORMATION (A) FROM ORIGIN            │
│ OF LOGARITHMIC POLAR COORDINATE                          │
└─────────────────────────────────────────────────────────┘
                            │
┌─────────────────────────────────────────────────────────┐
│ GENERATION OF COMPLEX AMPLITUDE INFORMATION (C)          │
│ (=A * A * h * T * T) BASED ON PHASE INFORMATION          │
│ (A), INFORMATION (h) OF STANDARD IMAGE, AND              │
│ AMPLITUDE INFORMATION (T)                                │
└─────────────────────────────────────────────────────────┘
                            │
┌─────────────────────────────────────────────────────────┐
│ GENERATION OF COMPUTER-GENERATED HOLOGRAM                │
│ DATA BASED ON COMPLEX AMPLITUDE INFORMATION (C)          │
└─────────────────────────────────────────────────────────┘
                            │
┌─────────────────────────────────────────────────────────┐
│ GENERATION OF APPLIED VOLTAGE DATA                       │
│ CORRESPONDING TO TRANSMISSION COEFFICIENT OF             │
│ EACH PIXEL OF LIQUID CRYSTAL DISPLAY BASED               │
│ ON COMPUTER-GENERATED HOLOGRAM DATA                      │
└─────────────────────────────────────────────────────────┘
```

## Fig. 5

## Fig. 6

Fig. 7

Fig. 8

Fig. 9

EP 0 884 668 A1

Fig. 10

EP 0 884 668 A1

European Patent
Office

**EUROPEAN SEARCH REPORT**

Application Number

EP 98 11 3965

## DOCUMENTS CONSIDERED TO BE RELEVANT

| Category | Citation of document with indication. where appropriate, of relevant passages | Relevant to claim | CLASSIFICATION OF THE APPLICATION (Int.Cl.6) |
|---|---|---|---|
| A | PATENT ABSTRACTS OF JAPAN vol. 008, no. 171 (P-293), 8 August 1984 & JP 59 065823 A (RICOH KK), 14 April 1984 * abstract * | | G06E3/00 G06K9/58 G06K9/74 |
| A | PATENT ABSTRACTS OF JAPAN vol. 005, no. 077 (P-062), 21 May 1981 & JP 56 024310 A (RICOH CO LTD), 7 March 1981 * abstract * | | |
| A,D | D. CASASENT: "Real-time deformation invariant optical pattern recognition using coordinate transformations" APPLIED OPTICS, vol. 26, no. 5, 1 March 1987, pages 938-942, XP002079831 New York US | | |

TECHNICAL FIELDS
SEARCHED     (Int.Cl.6)

G06K

The present search report has been drawn up for all claims

| Place of search | Date of completion of the search | Examiner |
|---|---|---|
| THE HAGUE | 7 October 1998 | Sonius, M |